# EUROPÄISCHE PATENTSCHRIFT

(11) **EP 1 604 768 B1**
(45) Veröffentlichungstag und Bekanntmachung des Hinweises auf die Patenterteilung: **03.10.2007**
(21) Anmeldenummer: 04291437.4
(22) Anmeldetag: 09.06.2004
(51) Int. Cl.: B23K 9/167

(54) **Verfahren zur kontinuierlichen Herstellung längsnahtgeschweisster Metallrohre**
Method for the continuous production of longitudinally seam welded metal tube
Procédé de fabrication en continu de tuyaux métalliques soudés longitudinalement

(43) Veröffentlichungstag der Anmeldung: 14.12.2005
(73) Patentinhaber: Nexans, 75008 Paris (FR)
(72) Erfinder: Frohne, Christian, Dr., 30657 Hannover (DE); Hoffmann, Ernst, 30855 Langenhagen (DE); Brünn, Rainer, 29690 Essel (DE)
(74) Vertreter: Döring, Roger

(56) Entgegenhaltungen:
- GB-A- 1 412 300
- US-A- 4 143 260
- US-A- 6 028 283
- US-A- 6 054 667

## Beschreibung

Die Erfindung betrifft ein Verfahren zur kontinuierlichen Herstellung längsnahtgeschweißter Metallrohre nach dem Oberbegriff des Anspruchs 1.

Zur kontinuierlichen Herstellung längsnahtgeschweißter Rohre sind verschiedene Schweißverfahren bekanntgeworden.

Neben dem Hochfrequenzschweißen bzw. Induktionsschweißverfahren sind noch das Lichtbogenschweißverfahren (WIG-Schweißverfahren) sowie das Laserschweißverfahren zu nennen. Insbesondere das Laserschweißverfahren erfreut sich in letzter Zeit zunehmender Bedeutung. Nachteile beim Laserschweißverfahren sind die hohen Investitions- und Betriebskosten und die Tatsache, daß das Schweißen von Metallen mit blanker Oberfläche, z. B. Kupfer, Schwierigkeiten bereitet, da ein Großteil der Laserenergie von der blanken Metalloberfläche reflektiert wird und somit für den Schweißprozeß nicht verfügbar ist. Auch müssen besondere Vorkehrungen für das Personal gegen fehlgeleitete Laserstrahlen getroffen werden.

Das Hochfrequenzschweißverfahren zeichnet sich durch hohe Fertigungsgeschwindigkeiten aus, jedoch läßt die Qualität der Schweißnaht sehr zu wünschen übrig, so daß hochfrequenzgeschweißte Metallrohre zur Umhüllung von Kunststoffrohren oder von elektrischen Kabeln nicht geeignet sind.

Aus der DE-A-22 56 851 ist eine Anordnung zum Verschweißen dünner, unter einem feststehenden Schweißkopf durchlaufender Bleche, insbesondere zum Verschweißen der in Längsrichtung verlaufenden Kanten eines zum Rohr geformten Metallbandes, bekannt. Der Schweißkopf dieser Anordnung weist drei in Richtung der Schweißnaht hintereinander angeordnete, nicht abschmelzende Elektroden auf, die aus getrennten Stromquellen gespeist werden. Die Verwendung von drei Elektroden dient der Erhöhung der Schweißgeschwindigkeit, d. h. daß alle drei Elektroden am Schweißprozeß teilnehmen. Ist eine der Elektroden abgenutzt, muß der Schweißprozeß unterbrochen werden mit der Folge, daß die Fertigung unterbrochen und wieder angefahren werden muß oder daß bei kontinuierlicher Arbeitsweise die Längsnaht über eine bestimmte Länge nicht verschweißt ist.

Die Standzeit einer Elektrode beim Schweißen mit Lichtbogen unter Schutzgas ist abhängig vom Verschmutzungsgrad des verwendeten Bandmaterials. Für die Verschweißung von Aluminiumbändern sind in der Praxis Längen von bis zu 1000 m herstellbar.

Der Erfindung liegt die Aufgabe zugrunde, ein Verfahren zur Herstellung längsnahtgeschweißter Metallrohre mit einer Lichtbogenschweißeinrichtung anzugeben, bei dem große Längen ohne Unterbrechung des Schweißvorgangs herstellbar sind.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Neben den sich aus der Aufgabenstellung direkt ergebenden Vorteilen ergibt sich durch die Erfindung noch der Vorteil, daß die Fertigung nicht unterbrochen werden muß, und daß dadurch die Produktivität gesteigert werden kann.

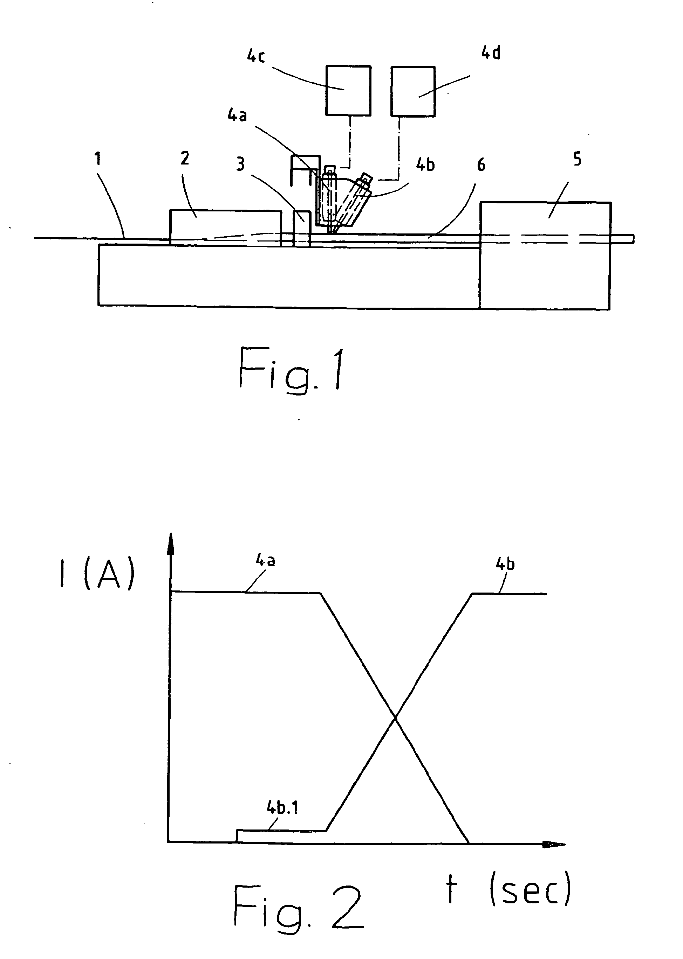

Die Erfindung wird anhand der in den Fig. 1 und 2 schematisch dargestellten Ausführungsbeispiele näher erläutert.

Ein von einem nicht näher dargestellten Bandvorrat abgezogenes Metallband 1 wird einer Formvorrichtung 2 zugeführt, in welcher es durch nicht gesondert dargestellte Formkonen bzw. Formrollen allmählich zu einem Rohr mit Längsschlitz geformt wird. Das aus der Formvorrichtung 2 austretende Rohr mit Längsschlitz tritt abschließend durch einen Formring 3, welcher die Aufgabe hat, die Längskanten des Metallbandes 1 auf Stoß zu halten.

Unmittelbar hinter dem Formring 3 ist eine Schweißvorrichtung 4 angeordnet, welche aus den in Fertigungsrichtung gesehen hintereinander angeordneten Schweißeinrichtungen bzw. Schweißbrennern 4a und 4b besteht. Jede Schweißeinrichtung besitzt eine nicht näher dargestellte, nicht abschmelzende Elektrode.

Die Schweißeinrichtungen 4a und 4b sind in einer nicht näher bezeichneten Halterung zu einer Einheit zusammengefaßt, wie beispielsweise in der eingangs zitierten DE-A-22 56 851 beschrieben.

Die Schweißeinrichtung 4a ist vorzugsweise vertikal ausgerichtet, wogegen die Schweißeinrichtung 4b unter einem spitzen Winkel von vorzugsweise 30° bis 85° geneigt zur Längsachse des Metallrohres ausgerichtet ist. Diese Ausgestaltung gewährleistet, daß die Schweißeinrichtung 4a bzw. deren Elektrode sehr nahe an den Formring 3 gelangt, und daß dadurch vermieden ist, daß sich die Längskanten des Metallrohres voneinander entfernen.

Jede Schweißeinrichtung 4a und 4b besitzt eine eigene regelbare Schweißstromquelle 4c bzw. 4d.

Hinter der Schweißvorrichtung 4 greift eine Abzugsvorrichtung 5 an dem geschweißten Rohr 6 an und führt dieses einer Weiterverarbeitung zu, die beispielsweise eine nicht mehr dargestellte Extrusionsvorrichtung sein kann, welche eine Kunststoffschicht auf das geschweißte Rohr 6 aufbringt.

### Das Verfahren nach der Erfindung läuft beispielsweise wie folgt ab:

Für den Schweißvorgang ist zunächst nur eine der Schweißeinrichtungen 4a und 4b im Einsatz, z. B. die Schweißeinrichtung 4a. Wird nun festgestellt, daß die Elektrode der Schweißeinrichtung 4a abgenutzt ist, wird zwischen dem durchlaufenden Rohr und der Elektrode der Schweißeinrichtung 4b in an sich bekannter Weise ein Hilfslichtbogen gezündet. Der Hilfslichtbogen übt keinen Einfluß auf den Lichtbogen der in Betrieb befindlichen Schweißeinrichtung aus, er gewährleistet jedoch ein stabiles Brennen des Lichtbogens der in Wartestellung befindlichen Schweißeinrichtung. Sodann wird der Schweißstrom der Schweißeinrichtung 4a allmählich verringert und gleichzeitig der Schweißstrom der Schweißeinrichtung 4b erhöht. Wesentlich dabei ist, daß die Summe der Schweißströme der Schweißeinrichtungen 4a und 4b der notwendigen Schweißstromstärke zum Verschweißen der Längsnaht des Rohres nahezu entspricht. Nachdem nun die Schweißstromstärke der Schweißeinrichtung 4b die erforderliche Größe erreicht hat, wird die Schweißeinrichtung 4a abgestellt, und die Elektrode kann ausgewechselt werden.

Zum Auswechseln der Elektrode wird diese wie in der EP-B-676 256 beschrieben nach oben herausgezogen.

Wenn die Elektrode der Schweißeinrichtung 4b abgenutzt ist, wiederholt sich der beschriebene Vorgang analog.

Mit besonderem Vorteil kann das erfindungsgemäße Verfahren bei der Herstellung von sogenannten Verbundrohren eingesetzt werden. Dieses Verfahren besteht darin, daß auf ein Kunststoffrohr zunächst eine Kleberschicht aufgebracht wird. Das Metallband 1 wird dann um das Kunststoffrohr herum zu einem Metallrohr geformt und sein Längsschlitz wird anschließend verschweißt. Der Innendurchmesser des Metallrohres ist etwas größer als der Außendurchmesser des mit der Kleberschicht versehenen Kunststoffrohres. Nach dem Erkalten der Schweißnaht wird das geschweißte Metallrohr auf das Kunststoffrohr heruntergezogen. Abschließend wird auf das Metallrohr eine Kleberschicht sowie eine Kunststoffschicht durch Extrusion aufgebracht.

Die auf diese Weise hergestellten Verbundrohre sind biegbar, leicht und diffusionsdicht. Sie werden bevorzugt bei Fußbodenheizungen eingesetzt.

In Fig. 2 ist der Verlauf der Schweißstromstärke I der beiden Schweißeinrichtungen 4a und 4b über der Zeit t dargestellt. Die Schweißstromstärke der Schweißeinrichtung 4a (mit 4a bezeichnet) verläuft zunächst in konstanter Größe. Wird nun festgestellt, daß die Elektrode der Schweißeinrichtung 4a abgenutzt ist, wird ein Hilfslichtbogen (s. 4b.1) zwischen dem durchlaufenden Rohr und der Elektrode der Schweißeinrichtung 4b gezündet. Anschließend wird die Schweißstromstärke der Schweißeinrichtung 4b allmählich erhöht, während gleichzeitig die Schweißstromstärke der Schweißeinrichtung 4a verringert wird.

## Patentansprüche

1. Verfahren zur kontinuierlichen Herstellung längsnahtgeschweißter Metallrohre, bei dem ein Metallband von einem Bandvorrat abgezogen, in einer Formvorrichtung allmählich zum Schlitzrohr geformt, das Schlitzrohr in einer Schweißvorrichtung an seinen Bandkanten verschweißt und das geschweißte Rohr durch eine Abzugsvorrichtung abgezogen wird, bei welchem die Schweißvorrichtung eine Schutzgas-Lichtbogenschweißvorrichtung mit mehreren von getrennten Schweißstromquellen gespeisten Elektroden ist, und die Elektroden in Fertigungsrichtung hintereinander angeordnet sind, **dadurch gekennzeichnet, daß** die Schweißvorrichtung zwei Schweißeinrichtungen aufweist, deren Elektrodenspitzen auf einen gemeinsamen Schweißpunkt gerichtet sind, daß jeweils nur eine der Schweißeinrichtungen in Betrieb ist, wogegen die andere Schweißeinrichtung sich in Wartestellung befindet, daß bei einem notwendigen Elektrodenwechsel zunächst der Lichtbogen der in Wartestellung befindlichen Schweißeinrichtung mittels eines Hilfslichtbogens gezündet wird und daß die Schweißstromstärke der in Betrieb befindlichen Schweißeinrichtung verringert wird und gleichzeitig die Schweißstromstärke der in Wartestellung befindlichen Schweißeinrichtung hochgefahren wird.

2. Verfahren nach Anspruch 1, **dadurch gekennzeichnet, daß** zum Auswechseln einer Elektrode diese nach oben aus der Schweißeinrichtung herausgezogen und eine neue Elektrode von oben in die Schweißeinrichtung hineingeschoben wird.

3. Verfahren nach Anspruch 1 oder 2, **dadurch gekennzeichnet, daß** der Hilfslichtbogen keinen Einfluß auf den Lichtbogen der in Betrieb befindlichen Schweißeinrichtung ausübt, jedoch ein stabiles Brennen des Lichtbogens der in Wartestellung befindlichen Schweißeinrichtung gewährleistet.

4. Verfahren nach einem der Ansprüche 1 bis 3, bei welchem die letzte Stufe der Formvorrichtung ein das Schlitzrohr führender Formring ist, **dadurch gekennzeichnet, daß** die dem Formring benachbarte Schweißeinrichtung vertikal angeordnet wird und die in Durchlaufrichtung des Rohres gesehen dahinter angeordnete zweite Schweißeinrichtung unter einem Winkel von 30° bis 85° zur Längsachse des Metallrohres angeordnet wird.

## Claims

1. Process for the continuous manufacture of longitudinal-seam-welded metal tubes, in which a metal strip is drawn off from a strip supply, is formed in a forming apparatus gradually into the split tube, the split tube is welded together at its strip edges in a welding apparatus and the welded tube is removed by a withdrawal apparatus, and in which the welding apparatus is an inert-gas-shielded arc welding apparatus having a plurality of electrodes powered by separate welding current sources and the electrodes are disposed one behind the other in the direction of production, **characterized in that** the welding apparatus has two welding devices, the electrode tips of which are directed at a common welding spot, **in that** respectively only one of the welding devices is in operation whereas the other welding device is in the stand-by setting, **in that**, in the event of a necessary change of electrode, the arc of the stand-by welding device is first ignited by means of an auxiliary arc, and the welding current strength of the operating welding apparatus is reduced and, at the same time, the welding current strength of the stand-by welding device is raised.

2. Process according to Claim 1, **characterized in that**, to replace an electrode, this is pulled upwards out of the welding device and a new electrode is slipped from above into the welding device.

3. Process according to Claim 1 or 2, **characterized in that** the auxiliary arc exerts no influence upon the arc of the operating welding device, yet ensures a stable burning of the arc of the stand-by welding device.

4. Process according to one of Claims 1 to 3, in which the last stage of the forming apparatus is a forming ring carrying the split tube, **characterized in that** the welding device adjacent to the forming ring is vertically disposed, and the second welding device, which is disposed behind this, viewed in the direction of travel of the tube, is disposed at an angle of 30° to 85° to the longitudinal axis of the metal tube.

## Revendications

1. Procédé de fabrication en continu de tuyaux métalliques soudés longitudinalement, dans lequel une bande métallique est prélevée dans une réserve de bande, façonnée progressivement en un tuyau fendu dans un dispositif de façonnage, le tuyau fendu est soudé sur ses arêtes de bande dans un dispositif de soudage et le tuyau soudé est extrait par un dispositif d'extraction, dans lequel le dispositif de soudage est un dispositif de soudage à l'arc électrique sous gaz protecteur avec plusieurs électrodes alimentées par des sources de courant de soudage distinctes, et les électrodes sont disposées l'une derrière l'autre dans le sens de la fabrication, **caractérisé en ce que** le dispositif de soudage comprend deux postes de soudage, dont les pointes d'électrode sont dirigées vers un point de soudage commun, **en ce qu'**un seul des postes de soudage est chaque fois en fonctionnement et l'autre poste de soudage se trouve au contraire en position d'attente, **en ce que**, lorsqu'un changement d'électrode est nécessaire, on allume d'abord l'arc électrique du poste de soudage se trouvant en position d'attente au moyen d'un arc électrique auxiliaire, et **en ce que** l'intensité du courant de soudage du poste de soudage se trouvant en fonctionnement est réduite et en même temps l'intensité du courant de soudage du poste de soudage se trouvant en position d'attente est augmentée.

2. Procédé selon la revendication 1, **caractérisé en ce que**, pour le remplacement d'une électrode, celle-ci est extraite vers le haut hors du poste de soudage et une nouvelle électrode est introduite par le haut dans le poste de soudage.

3. Procédé selon la revendication 1 ou 2, **caractérisé en ce que** l'arc électrique auxiliaire n'exerce aucune influence sur l'arc électrique du poste de soudage se trouvant en fonctionnement, mais garantit cependant un maintien stable de l'arc électrique du poste de soudage se trouvant en position d'attente.

4. Procédé selon l'une quelconque des revendications 1 à 3, dans lequel le dernier étage du dispositif de façonnage est une bague de formage guidant le tuyau fendu, **caractérisé en ce que** le poste de soudage proche de la bague de formage est disposé verticalement et le deuxième poste de soudage disposé derrière celui-ci dans le sens de défilement du tuyau est disposé sous un angle de 30° à 85° par rapport à l'axe longitudinal du tuyau métallique.
